# EUROPÄISCHE PATENTSCHRIFT

(11) **EP 0 942 863 B1**
(45) Veröffentlichungstag und Bekanntmachung des Hinweises auf die Patenterteilung: **07.06.2000**
(21) Anmeldenummer: 97953772.7
(22) Anmeldetag: 10.12.1997
(51) Int. Cl.: B62D 5/06, F16F 9/52

(54) **DÄMPFERVENTILANORDNUNG**
DAMPER VALVE CONFIGURATION
DISPOSITIF A SOUPAPE D'AMORTISSEMENT

(30) Priorität: 11.12.1996 DE 19651500
(43) Veröffentlichungstag der Anmeldung: 22.09.1999
(73) Patentinhaber: DaimlerChrysler AG, 70567 Stuttgart (DE); VA TECH Industriehansa Consulting & Engineering GmbH., 81677 München (DE)
(72) Erfinder: ASBRAND, Ulrich, D-73630 Remshalden (DE); SÜLBERG, Martin, D-73760 Ostfildern (DE); SCHULER, Thomas, D-73061 Ebersbach (DE)
(86) Internationale Anmeldenummer: EP9706886
(87) Internationale Veröffentlichungsnummer: WO9825807

(56) Entgegenhaltungen:
- DE-A- 4 423 658
- DATABASE WPI Section PQ, Week 8107 Derwent Publications Ltd., London, GB; Class Q63, AN 81-B3369D XP002063660 & SU 739 281 B (MOSCOW LIKHACHEV CAR WKS)

## Beschreibung

Die Erfindung betrifft eine Dämpferventilanordnung, welche für eine hydraulische Servolenkung geeignet ist, deren Servomotor als hydrostatisches Motoraggregat bzw. als hydraulisches Verdrängeraggregat ausgebildet ist und auch als Lenkungsdämpfer wirkt, indem in Hydraulikleitungen zwischen Servomotor und Servoventil zumindest eine Dämpferventilanordnung vorgesehen ist, mit einem ersten Strömungsweg, der durch ein erstes hubbewegliches Ventilelement nach Art eines Rückschlagventiles steuerbar ist, und einem durch ein zweites Ventilelement dämpfungswirksam steuerbaren zweiten Strömungsweg. Eine solche Dämpferventilanordnung ist zum Beispiel aus der DE-A-4 423 658 bekannt.

Heutige Kraftfahrzeuge sind regelmäßig mit einer Servolenkung ausgerüstet, die zumindest im Falle von Personenkraftwagen typischerweise mit hydraulischer Hilfskraft arbeitet, derart, daß die vom Fahrer bei Betätigung der Fahrzeuglenkung aufzubringenden Kräfte immer hinreichend gering gehalten werden.

Soweit zur Vermeidung bzw. Unterdrückung von Schwingungen im Lenksystem eine Lenkungsdämpferanordnung notwendig ist, kann gemäß der DE-OS 40 29 156 ein als Servomotor dienendes doppeltwirkendes Kolben-Zylinder-Aggregat auch als Lenkungsdämpfer wirken, wenn in den Leitungen zwischen dem Kolben-Zylinder-Aggregat und dem zu dessen Steuerung dienenden Servoventil über das das Kolben-Zylinder-Aggregat steuerbar mit einer hydraulischen Druckquelle sowie einem relativ drucklosen Hydraulikreservoir verbindbar ist, Dämpferventilanordnungen vorgesehen sind.

Eine prinzipiell ähnliche Anordnung wird in der DE-OS 41 06 310 beschrieben.

Aus der DE-OS 29 27 039 (= GB 20 51 714 A) ist es bekannt, an den zylinderseitigen Anschlüssen der Leitungen, welche das Servoventil mit dem doppeltwirkenden Kolben-Zylinder-Aggregat der Servolenkung verbinden, jeweils ein in Richtung zu dem jeweiligen Kolben-Arbeitsraum hin sich öffnendes, mit einer Drosseldurchgangsbohrung versehenes Rückschlagventil anzuordnen, dessen Ventilgehäuse von einer Schraube gebildet sein kann, die zur Befestigung der jeweiligen Leitung am Zylinder dient.

Nach der DE 43 23 179 A1 ist zur Vereinfachung der Dämpferventilanordnungen vorgesehen, die Dämpferventilelemente an einem lochscheibenartigen Ventilträgerteil anzubringen, dessen vom Hydraulikmedium durchsetzte Löcher mittels stirnseitig am Ventilträgerteil durch Bolzen gehalterter Ventilplättchen bzw. gefederter Ventilplatten steuerbar sind. Das Ventilträgerteil kann nach Art eines Distanzringes oder einer Distanzscheibe zwischen einer Lagerfläche eines am Gehäuse des Servoventiles oder des Servomotors angeordneten Anschlußstutzens und einer Gegenlagerfläche des mit dem Anschlußstutzen verbindbaren Anschlußteiles der jeweiligen Hydraulikleitung eingespannt werden.

Statt dessen ist es auch möglich, das Ventilträgerteil im Anschlußstutzen bzw. im Anschlußteil unverlierbar zu haltern, wie es beispielsweise in der DE 44 23 658 A1 dargestellt ist.

Aufgabe der Erfindung ist es nun, eine neue Dämpferventilanordnung zu schaffen, welche auch unter wechselnden Betriebsbedingungen optimal arbeiten kann.

Diese Aufgabe wird mit einer Dämpferventilanordnung der eingangs angegebenen Art gelöst, wenn das erste Ventilelement als hubbeweglicher und temperaturabhängig drehverstellbarer Drehschieber ausgebildet ist, der bei Drehverstellung den ersten Strömungsweg und/oder einen Bypaßweg in Rückschlagrichtung öffnet bzw. schließt.

Die Erfindung beruht auf dem allgemeinen Gedanken, temperaturabhängige Änderungen der Viskosität des hydraulischen Mediums und die damit einhergehende Änderung der Strömungswiderstände in Rückschlagrichtung zu kompensieren, indem bei niedriger Temperatur, wenn das Hydraulikmedium vergleichsweise dickflüssig wird, ein das drosselwirksame zweite Ventilelement umgehender Strömungsweg zunehmend freigegeben wird.

Dies wird im Prinzip dadurch gewährleistet, daß das erste Ventilelement einerseits aufgrund seiner Hubbeweglichkeit mit von ihm gesteuerten Strömungswegen nach Art eines Rückschlagventiles zusammenwirkt und durch eine zusätzliche Drehbeweglichkeit die vorgenannten Strömungswege und/oder einen Bypaßweg unabhängig von seiner Hubstellung öffnen kann.

Gemäß einer bevorzugten Ausführungsform der Erfindung besitzt die Dämpferventilanordnung ein lochscheibenförmiges Trägerteil, dessen Bohrungen die Strömungswege bilden. Dabei wirkt eine gefederte Ventilplatte mit einem Teil der Bohrungen nach Art eines Rückschlagventiles zusammen. Durch Drehung der Ventilplatte können eine oder mehrere Öffnungen bzw. Ausnehmungen in der Platte in mehr oder weniger weite Überdeckung mit zumindest einer von der Ventilplatte gesteuerten Bohrung gebracht werden.

Die Drehung der Ventilplatte kann durch Bimetallelemente bewirkt werden, welche gegebenenfalls gleichzeitig die Funktion einer die Ventilplatte gegen das Trägerteil drängenden Schließfeder übernehmen können.

Im übrigen wird hinsichtlich bevorzugter Merkmale der Erfindung auf die Ansprüche sowie die nachfolgende Erläuterung der Zeichnung verwiesen, anhand der bevorzugte Ausführungsformen der Erfindung beschrieben werden.

Dabei zeigt
- Fig. 1: eine schaltplanartig schematisierte Darstellung einer hydraulischen Servolenkung mit Dämpferventilen am Servomotor,
- Fig. 2: ein Schnittbild einer Dämpferventilanordnung,
- Fig. 3: eine Draufsicht auf eine Ventilplatte entsprechend dem Pfeil III in Fig. 2,
- Fig. 4: eine Draufsicht auf ein Trägerteil entsprechend dem Pfeil III in Fig. 2 und
- Fig. 5: verschiedene Varianten zur Drehsteuerung der Ventilplatte.

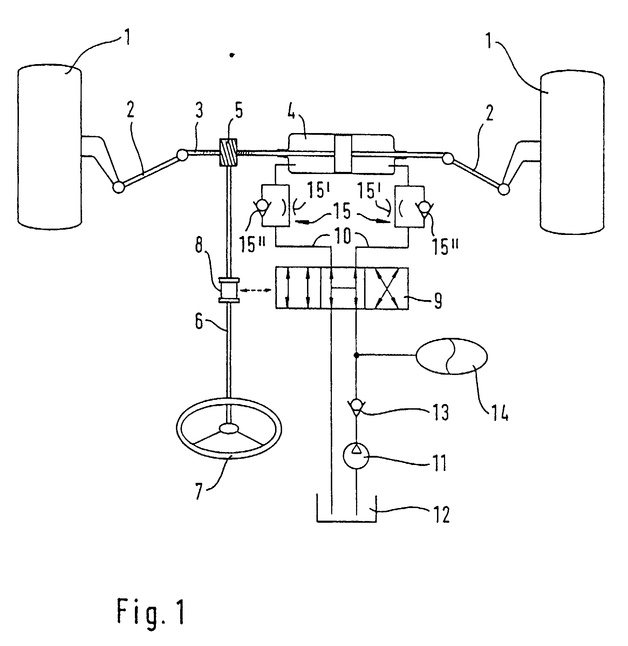

Gemäß Fig. 1 besitzt ein nicht näher dargestelltes Kraftfahrzeug vordere Fahrzeuglenkräder 1, die im dargestellten Beispiel über Spurstangen 2 mit einer Zahnstange 3 verbunden sind, welche gleichachsig in die Kolbenstange eines als Servomotor angeordneten doppeltwirkenden Kolben-Zylinder-Aggregates 4 übergeht bzw. mit der Kolbenstange verbunden ist.

Die Zahnstange 3 kämmt mit einem Ritzel 5, welches über eine Lenksäule 6 mit einem Lenkhandrad 7 antriebsmäßig verbunden ist. In der Lenksäule 6 ist ein drehelastisches Element 8 angeordnet, so daß zwischen Ritzel 5 und Lenkhandrad 7 eine begrenzte Relativdrehung auftreten kann, deren Maß von den zwischen dem Ritzel 5 und dem Lenkhandrad 7 übertragenen Kräften und Drehmomenten abhängig ist.

Diese Relativdrehung steuert ein Servoventil 9, welches über Motorleitungen 10 an die beiden Kammern des Kolben-Zylinder-Aggregates 4 angeschlossen und des weiteren mit der Druckseite einer Hydraulikpumpe 11 sowie einem relativ drucklosen Hydraulikreservoir 12 verbunden ist, an das die Saugseite der Pumpe 11 angeschlossen ist.

In der dargestellten Mittellage des Servoventiles 9 sind die beiden Kammern des Kolben-Zylinder-Aggregates 4 miteinander sowie mit dem Reservoir 12 verbunden. Außerdem kann eine Verbindung zur Druckseite der Pumpe 11 bestehen, welche dann ständig laufen kann.

Statt dessen kann das Servoventil 9 auch derart ausgebildet sein, daß in seiner Mittelstellung der Ventilanschluß zur Druckseite der Pumpe 11 abgesperrt ist, welche in diesem Falle über ein Rückschlagventil 13 einen Druckspeicher 14 laden und in Abhängigkeit vom Ladedruck gesteuert bzw. bei hohem Ladedruck ausgeschaltet werden kann.

Sobald zwischen dem Ritzel 5 und dem Lenkhandrad 7 Kräfte bzw. Drehmomente wirksam sind, wird das Servoventil 9 in der einen oder anderen Richtung aus seiner Mittellage verschoben.

Dies hat zur Folge, daß zwischen den Motorleitungen 12 eine mehr oder weniger große Druckdifferenz in der einen oder anderen Richtung und damit eine mehr oder weniger große Servokraft des Kolben-Zylinder-Aggregates 4 in der einen oder anderen Richtung erzeugt und die jeweils am Lenkhandrad 7 für ein Lenkmanöver aufzubringende Kraft entsprechend vermindert wird.

Bei der erfindungsgemäßen Lenkung übernimmt das als Servomotor dienende Kolben-Zylinder-Aggregat 4 auch die Funktion eines Lenkungsdämpfers zur Dämpfung schneller Lenkwinkeländerungen der Fahrzeuglenkräder 1. Zu diesem Zweck sind in den Leitungen 10 bzw. vorzugsweise an den Anschlüssen der Leitungen 10 am Kolben-Zylinder-Aggregat 4 oder am Servoventil 9 jeweils Dämpferventile 15 angeordnet, welche in Fig. 1 schematisiert als Drosseln 15' sowie dazu parellele Rückschlagventile 15" dargestellt sind, die jeweils bei einer Strömung zum Kolben-Zylinder-Aggregat 4 hin öffnen. Da bei einer Hubbewegung des Kolbens des Kolben-Zylinder-Aggregates 4 jeweils eine der Drosseln 15' der Dämpferventile 15 wirksam wird, werden schnelle Bewegungen des Kolbens des Kolben-Zylinder-Aggregates 4 und dementsprechend schnelle Lenkverstellungen der Fahrzeuglenkräder 1 gedämpft.

Erfindungsgemäß ändert sich die Dämpfungswirkung der Dämpferventile 15 in Abhängigkeit von der Temperatur, wie weiter unten dargestellt wird.

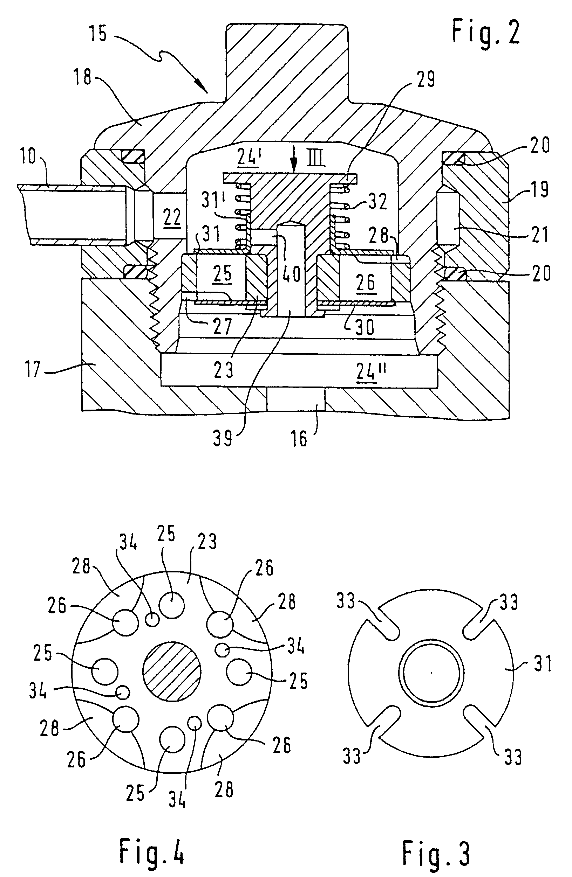

Fig. 2 zeigt nun den Aufbau des Dämpferventiles 15.

Am Gehäuse des Servoventiles 9 ist für jede Motorleitung 10 eine Anschlußöffnung 16 vorgesehen, die innerhalb eines Innengewindeteiles 17 gleichachsig zur Gewindeachse angeordnet ist. In das Innengewindeteil 17 ist ein hutförmiges Anschlußteil 18 mit einem an ihm angeordneten Außengewinde eingedreht, wobei zwischen einander gegenüberliegenden Flanschflächen am Innengewindeteil 17 einerseits und am Anschlußteil 18 andererseits ein mit der Motorleitung 10 fest verbundener Haltering 19 axial eingespannt ist und die Spalte zwischen den Stirnseiten des Halteringes 19 und den zugewandten Flanschflächen des Innengewindeteiles 17 und des Anschlußteiles 18 durch Dichtringe 20 druckfest abgesperrt sind.

Der Haltering 19 besitzt auf seinem Innenumfang einen nach Art einer Ringnut ausgebildeten Kanal 21, welcher einerseits mit der Motorleitung 10 und andererseits mit einer oder mehreren Radialbohrungen 22 im Anschlußteil 18 kommuniziert und damit eine Verbindung zwischen der Motorleitung und dem Innenraum des Anschlußteiles 18 herstellt.

Innerhalb des Anschlußteiles 18 ist ein kreisscheibenförmiges bzw. kolbenförmiges Trägerteil 23 fest und unverlierbar gehaltert, welches innerhalb des Anschlußteiles 18 einen an die Radialbohrung bzw. Radialbohrungen 22 anschließenden Raum 24' von einem an die Anschlußöffnung 16 anschließenden Raum 24" abtrennt.

Das Trägerteil 23 besitzt Axialbohrungen 25 und 26, wobei die Axialbohrungen 25 in eine zum Raum 24" geöffnete Vertiefung 27 auf der in Fig. 2 unteren Stirnseite des Trägerteiles 23 und die Axialbohrungen 26 in eine ähnliche Vertiefung 28 auf der in Fig. 2 oberen Stirnseite des Trägerteiles 23 münden.

In einer Zentralöffnung des Trägerteiles 23 ist ein Bolzen 29 gehaltert, welcher auf einer Stirnseite des Trägerteiles 23 - im Beispiel der Fig. 2 auf der unteren Stirnseite des Trägerteiles 23 - zumindest eine kreisscheibenförmige Federplatte 30 haltert und auf der anderen Stirnseite des Trägerteiles 23 als Axialführung für eine Ringscheibe 31 ausgebildet ist.

Die Federplatte bzw. die Federplatten 30 sind so bemessen, daß sie die Axialbohrungen 26 des Trägerteiles 23 zumindest weitestgehend überdecken und größere Bereiche der den Axialbohrungen 25 zugeordneten Vertiefungen 27 freilassen. Die Ringscheibe 31 ist so bemessen, daß sie die Axialbohrungen 25 zu überdecken vermag und die den Axialbohrungen 26 zugeordneten Vertiefungen 28 auf größeren Bereichen frei läßt.

Die Ringscheibe 31 kann an ihrem Innenumfangsrand zur axial verschiebbaren Führung auf dem Bolzen 29 einen hülsenförmigen Fortsatz 31' aufweisen, welcher den Bolzen 29 mit geringem radialen Spiel umfaßt. Zwischen der Ringscheibe 31 und einem am freien Ende des Bolzens 29 angeordneten Flansch ist eine Schraubendruckfeder 32 eingespannt, welche die Ringscheibe 31 gegen das Trägerteil 23 spannt.

Das in Fig. 2 dargestellte Dämpferventil 15 funktioniert im Normalfall wie folgt:

Im Falle einer Strömung von der Anschlußöffnung 16 zur Motorleitung 10 werden die Axialbohrungen 25 des Trägerteiles 23 vom Hydraulikmedium durchsetzt, wobei die Ringscheibe 31 gegen die in der Regel relativ geringe Kraft der Schraubendruckfeder 32 angehoben wird.

Bei umgekehrter Strömungsrichtung, d.h. bei einer Strömung von der Motorleitung 10 zur Anschlußöffnung 16 wird die Ringscheibe 31 gegen das Trägerteil 23 gedrängt, so daß die Ringscheibe 31 mit dem Trägerteil 23 nach Art eines Rückschlagventiles zusammenwirkt und die Axialbohrungen 25 absperrt. Das Hydraulikmedium strömt nun über die von der Ringscheibe 31 freigelassenenen Vertiefungen 28 durch die Axialbohrungen 26, wobei die Federplatten 30 mehr oder weniger weit von der unteren Stirnseite des Trägerteiles 23 weggebogen werden und ein deutlicher Drosselwiderstand auftritt.

Sollte bei sehr niedriger Temperatur die Viskosität des hydraulischen Mediums stark absinken und damit das hydraulische Medium "zähflüssig" werden, so kann dieser Drosselwiderstand sehr extreme Werte annehmen. Um zu vermeiden, daß in einem derartigen Falle die Lenkung übermäßig schwergängig wird, ist erfindungsgemäß vorgesehen, die Ringscheibe 31 nach Art eines Drehschiebers auszubilden, welcher bei niedriger Temperatur die von der Ringscheibe 31 gesteuerten Axialbohrungen 25 auch für eine Strömung von der Motorleitung 10 zur Anschlußöffnung 16 mehr oder weniger freigibt.

Dies wird nachfolgend erläutert.

Gemäß Fig. 3 beisitzt die Ringscheibe 31 mehrere Ausnehmungen oder Fenster 33. Gemäß Fig. 4 besitzt das Trägerteil 23 auf seiner der Ringscheibe 31 zugewandten Seite mehrere Vertiefungen 28, die von der Ringscheibe 31 auf größeren Bereichen nicht abgedeckt werden können, so daß immer eine Verbindung zu den von den Vertiefungen 28 ausgehenden Axialbohrungen 26 frei bleibt. Zwischen den Vertiefungen 28 sind die von der Ringscheibe 31 gesteuerten Axialbohrungen 25 angeordnet.

Bei normalen Betriebstemperaturen nimmt die Ringscheibe 31 eine Drehlage ein, in der die Ausnehmungen bzw. Fenster 33 außerhalb der Querschnitte der Axialbohrungen 25 liegen. Bei tieferen Temperaturen wird die Ringscheibe 31 gegenüber ihrer Normallage zunehmend verdreht, mit der Folge, daß sich die Ausnehmungen bzw. Fenster 33 und die Öffnungsquerschnitte der Axialbohrungen 25 mehr oder weniger weit überlappen und die Axialbohrungen 25 auch dann mehr oder weniger weit geöffnet sind, wenn die Ringscheibe 31 auf der zugewandten Stirnseite des Trägerteiles 23 aufliegt.

Die Ausnehmungen bzw. Fenster 33 können eine von der Form der Querschnitte der Axialbohrungen 25 abweichende Form haben, etwa derart, daß der von den Ausnehmungen bzw. Fenstern 33 freigegebene Querschnitt der Axialbohrungen 25 progressiv anwächst, wenn die Ringscheibe 31 aufeinanderfolgend um gleichbleibende Drehwinkel weitergedreht wird.

Gegebenenfalls können im Trägerteil 23 zusätzlich zu den Axialbohrungen 25 und 26 noch Bypaßöffnungen 34 angeordnet sein, welche sowohl außerhalb der Vertiefungen 27 als auch außerhalb der Vertiefungen 28 (vgl. Fig. 2) angeordnet sind und nur bei tieferen Temperaturen von Ausnehmungen bzw. Fenstern 33 in der Ringscheibe 31 freigegeben werden. Bei normaler Temperatur werden diese Bypaßöffnungen 34 bei einer Strömung von der Anschlußöffnung 16 zur Motorleitung 17 durch die Federplatten 30 geschlossen gehalten und in umgekehrter Strömungsrichtung durch die Ringscheibe 31 abgedeckt. Bei niedriger Temperatur kann das Hydraulikmedium bei einer Strömung von der Motorleitung zur Anschlußöffnung 16 in die Bypaßöffnungen 34 eintreten und diese gegen den Widerstand der Federplatten 30 durchströmen.

Bei niedrigen Temperaturen wird also durch die dann freigegebenen Bypaßöffnungen 34 der gegen den Widerstand der Federplatten 30 durchströmbare Querschnitt vergrößert.

Zusätzlich oder alternativ kann gemäß Fig. 2 vorgesehen sein, im Bolzen 29 eine zum Raum 24" offene zentrale Sackbohrung 39 anzuordnen, die oberhalb des Trägerteiles 23 mit einer Radialbohrung 40 kommuniziert. Diese Radialbohrung 40 wird bei normalen Betriebsverhältnissen durch den hülsenförmigen Fortsatz 31' der Ringscheibe abgesperrt, sobald diese auf dem Trägerteil 23 aufliegt. Bei niedrigen Temperaturen führt die Ringscheibe eine Drehverstellung aus, derart, daß die Radialbohrung 40 in den Öffnungsquerschnitt einer im Fortsatz 31' angeordneten Ausnehmung (nicht dargestellt) gelangt, die z.B. als Axialschlitz im Fortsatz 31' ausgebildet sein kann. Damit wird unabhängig von der Hubstellung der Ringscheibe 31 eine Verbindung zwischen den Räumen 24' und 24" freigegeben.

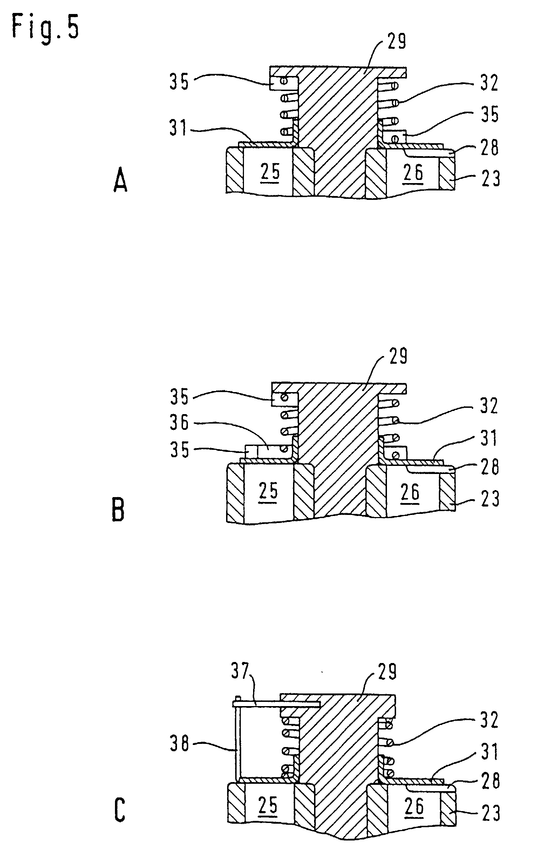

Die Fig. 5 zeigt nun beispielhafte Möglichkeiten für eine Drehverstellung der Ringscheibe 31.

Nach dem Bild A ist vorgesehen, die Schraubendruckfeder 32 als Bi-Metall-Feder auszubilden, derart, daß die Federenden relativ zueinander bei Temperaturänderungen eine Drehung bezüglich der Schraubenachse ausführen. Das eine Federende ist nun mit dem Flansch am freien Ende des Bolzens 29 bezüglich der Schraubenfederachse undrehbar verbunden, während das andere Federende entsprechend drehfest mit der Ringscheibe 31 gekoppelt ist. Dazu können die Federenden jeweils zwischen Anschlägen 35 oder an Halterungen am genannten Flansch des Bolzens 29 bzw. an der Ringscheibe 31 in Umfangsrichtung festgehalten sein.

Im Beispiel des Bildes B der Fig. 5 ist die Schraubendruckfeder 32 als herkömmliche Stahlfeder od.dgl. ausgebildet und an ihrem der Ringscheibe 31 zugewandten (unteren) Ende mit einer spiraligen Bi-Metall-Feder 36 verbunden, deren Enden bei Temperaturänderungen eine Drehbewegung in Umfangsrichtung relativ zueinander ausführen. Das von der Ringscheibe 31 abgewandte Ende der Schraubendruckfeder 32 ist wiederum durch Anschläge 35 am Flansch des Bolzens 29 undrehbar gehaltert, während das von der Schraubendruckfeder 32 abstehende Ende der Bi-Metall-Feder 36 an Anschlägen 35 od.dgl. an der Ringscheibe 31 gehaltert ist.

Im Beispiel des Bildes C der Fig. 5 ist am freien Ende des Bolzens 29 ein Bi-Metall-Hebel 37 gehaltert, dessen freies Ende bei Temperaturänderungen eine Bewegung in Umfangsrichtung bezüglich der Achse des Bolzens 29 ausführt. Das freie Ende des Hebels 37 greift in einen Axialschlitz einer an der Ringscheibe 31 angeordneten Abwinklung 38, so daß die Drehlage der Ringscheibe 31 durch die Lage des freien Endes des Bi-Metall-Hebels 37 bestimmt wird, die axiale Hubbewegung der Ringscheibe 31 durch diesen Hebel 37 jedoch nicht behindert wird.

Bei allen dargestellten Ausführungsformen der Fig. 5 führt also die Ringscheibe 31 bei Temperaturänderungen des Hydraulikmediums Drehbewegungen nach Art eines Drehschiebers aus, so daß die Querschnitte der Axialbohrungen 25 bzw. der Bypaßöffnungen 34 auch dann mehr oder weniger weit freigegeben werden, wenn die Ringscheibe 31 auf dem Trägerteil 23 aufsitzt.

## Patentansprüche

1. Dämpferventilanordnung - geeignet für eine hydraulische Servolenkung, deren Servomotor als hydrostatisches Motoraggregat bzw. als hydraulisches Verdrängeraggregat ausgebildet ist und auch als Lenkungsdämpfer wirkt, indem in Hydraulikleitungen zwischen Servomotor und Servoventil zumindest eine Dämpferventilanordnung vorgesehen ist - mit einem ersten Strömungsweg, der durch ein erstes hubbewegliches Ventilelement nach Art eines Rückschlagventiles steuerbar ist und einem durch ein zweites Ventilelement dämpfungswirksam steuerbaren zweiten Strömungsweg,
**dadurch gekennzeichnet**,
daß das erste Ventilelement (31) als hubbeweglicher und temperaturabhängig drehverstellbarer Drehschieber ausgebildet ist, der bei Drehverstellung den ersten Strömungsweg (25) und/oder einen Bypaßweg (34), welcher dämpfungswirksam vom zweiten Ventilelement (30) gesteuert wird, in Rückschlagrichtung öffnet bzw. schließt.

2. Dämpferventilanordnung nach Anspruch 1,
**dadurch gekennzeichnet**,
daß das erste Ventilelement als hubbewegliche Ringscheibe (31) ausgebildet ist, die mit zugeordneten Bohrungen (25) nach Art eines Rückschlagventiles zusammenwirkt, und daß diese Ringscheibe (31) mit Fenstern bzw. Ausnehmungen (33) versehen ist, die durch temperaturabhängige Drehverstellung der Ringscheibe (31) in mehr oder weniger weite Überdeckung mit Bypaßbohrungen (34) und/oder den von der Ringscheibe (31) gesteuerten Kanälen (25) bringbar sind.

3. Dämpferventilanordnung nach Anspruch 1 oder 2,
**dadurch gekennzeichnet**,
daß das erste Ventilelement als hubverstellbare Ringscheibe (31) mit einem hülsenförmigen Fortsatz (31') ausgebildet ist, mit dem die Ringscheibe auf einem Bolzen (29) od.dgl. axial verschiebbar geführt ist, und daß im Fortsatz (31') eine Ausnehmung bzw. ein Fenster angeordnet ist, welches durch Drehverstellung der Ringscheibe (31) in mehr oder weite Überdekkung mit einem im Bolzen (29) od.dgl. angeordneten Kanal (39,40) bringbar ist, welcher parallel zu den von der Ringscheibe (31) durch Hubbewegungen gesteuerten Kanälen (25) angeordnet ist.

4. Dämpferventilanordnung nach einem der Ansprüche 1 bis 3,
**dadurch gekennzeichnet,**
daß dem ersten Ventilelement (31) eine als Bi-Metall-Element ausgebildete Hub- und Rückstellfeder zugeordnet ist, welche an einem Ende mit einem stationären Widerlager und am anderen Ende mit dem Ventilelement (31) verbunden ist und als Aktuator für die Drehverstellung dient.

5. Dämpferventilanordnung nach einem der Ansprüche 1 bis 3,
**dadurch gekennzeichnet,**
daß dem ersten Ventilelement als Drehversteller ein Bi-Metall-Hebel (37) zugeordnet ist.

6. Dämpferventilanordnung nach einem der Ansprüche 1 bis 3,
**dadurch gekennzeichnet,**
daß zwischen einer dem ersten Ventilelement (31) zugeordneten Hub- und Rückstellfederung (32) und dem Ventilelement (31) als Drehversteller des ersten Ventilelementes (31) eine Bi-Metall-Feder (36) angeordnet ist.

## Claims

1. Damper valve arrangement which is suitable for a hydraulic power steering system, the servomotor of which is designed as a hydrostatic motor unit or as a hydraulic displacer unit and also acts as a steering damper, in that at least one damper valve arrangement is provided in hydraulic lines between servomotor and servovalve, having a first flow path, which can be controlled by a first liftable valve element in the manner of a non-return valve, and a second flow path, which can be controlled with a damping action by a second valve element, characterized in that the first valve element (31) is designed as a liftable rotary slide valve which is rotationally adjustable as a function of temperature and, in the event of rotational adjustment, closes or opens, in the non-return direction, the first flow path (25) and/or a bypass (34), which is controlled with a damping action by the second valve element (30).

2. Damper valve arrangement according to Claim 1, characterized in that the first valve element is designed as a liftable annular disc (31) which interacts with associated bores (25) in the manner of a non-return valve, and in that this annular disc (31) is provided with windows' or cutouts (33) which, by means of a temperature-dependent rotational adjustment of the annular disc (31), can be made to overlap, to a greater or lesser extent, bypass bores (34) and/or the ducts (25) which are controlled by the annular disc (31).

3. Damper valve arrangement according to Claim 1 or 2, characterized in that the first valve element is designed as an annular disc (31) with an adjustable lifting travel and with a sleeve-shaped extension (31'), by means of which the annular disc is guided in an axially displaceable manner on a bolt (29) or the like, and in that a cutout or a window is arranged in the extension (31'), which window, by means of a rotational adjustment of the annular disc (31), can be made to overlap, to a greater or lesser extent, a duct (39, 40) which is arranged in the bolt (29) or the like and is arranged parallel to the ducts (25) which are controlled by the annular disc (31) by means of lifting movements.

4. Damper valve arrangement according to one of Claims 1 to 3, characterized in that the first valve element (31) is assigned a lifting and return spring which is designed as a bimetallic element, is connected at one end to a stationary abutment and at the other end to the valve element (31) and serves as an actuator for the rotational adjustment.

5. Damper valve arrangement according to one of Claims 1 to 3, characterized in that the first valve element is assigned a bimetallic lever (37) as a rotation adjuster.

6. Damper valve arrangement according to one of Claims 1 to 3, characterized in that a bimetallic spring (36) is arranged between a lifting and restoring spring (32) assigned to the first valve element (31) and the valve element (31), as a rotation adjuster for the first valve element (31).

## Revendications

1. Dispositif de soupape d'amortissement destiné à une direction assistée hydraulique dont le servomoteur est réalisé comme groupe moteur hydrostatique ou comme groupe de déplacement hydraulique et agit également comme amortisseur de direction tandis que, dans les conduites hydrauliques entre le servomoteur et la servosoupape, il est prévu au moins un dispositif de soupape d'amortissement - avec une première voie d'écoulement qui est contrôlable par un premier élément de soupape à mouvement ascensionnel à la façon d'une soupape de retenue et avec une seconde voie d'écoulement contrôlable par effet d'amortissement par un second élément de soupape, caractérisé en ce que le premier élément de soupape (31) est réalisé comme tiroir rotatif qui a un mouvement ascensionnel, est à rotation réglable en fonction de la température et qui, lors du réglage de la rotation, ouvre ou ferme, dans le sens de retenue, la première voie d'écoulement (25) et/ou une voie de by-pass (34) qui est contrôlée par effet d'amortissement par le second élément de soupape (30).

2. Dispositif de soupape d'amortissement selon la revendication 1, caractérisé en ce que le premier élément de soupape est réalisé comme disque annulaire (31) à mouvement ascensionnel qui coopère avec des alésages (25) correspondants à la façon d'une soupape de retenue et en ce que ce disque annulaire (31) est muni de fenêtres ou de creux (33) qui, par le réglage de la rotation du disque annulaire (31) en fonction de la température, peuvent être transférés dans un recouvrement plus ou moins étendu avec des alésages de by-pass (34) et/ou des canaux (25) contrôlés par le disque annulaire (31).

3. Dispositif de soupape d'amortissement selon la revendication 1 ou 2, caractérisé en ce que le premier élément de soupape est réalisé comme disque annulaire (31) à mouvement ascensionnel avec un prolongement (31') en forme de douille par lequel le disque annulaire est guidé de façon à se déplacer axialement sur un boulon (29) ou similaire et en ce que dans le prolongement (31') est disposé un creux ou une fenêtre qui, par réglage de la rotation du disque annulaire (31), peut être amené dans un recouvrement plus ou moins étendu, par un canal (39, 40) disposé dans le boulon (29) ou similaires et parallèle aux canaux (25) contrôlés par le disque annulaire (31) par des mouvements ascensionnels.

4. Dispositif de soupape d'amortissement selon l'une quelconque des revendications 1 à 3, caractérisé en ce qu'au premier élément de soupape (31) est affecté un ressort de levée et de rappel sous forme d'élément bimétallique qui, à une extrémité, est relié à un contre-support fixe et, à l'autre extrémité, à l'élément de soupape (31) et sert d'actionneur pour le réglage de la rotation.

5. Dispositif de soupape d'amortissement selon l'une quelconque des revendications 1 à 3, caractérisé en ce qu'un levier bimétallique (37) est affecté au premier élément de soupape comme variateur de rotation.

6. Dispositif de soupape d'amortissement selon l'une quelconque des revendications 1 à 3, caractérisé en ce qu'un ressort bimétallique (36) est disposé entre un ressort de levée et de rappel (32) affecté au premier élément de soupape (31) et l'élément de soupape (31) en tant que variateur de rotation du premier élément de soupape (31).
